Europäisches Patentamt

(19) European Patent Office (11) Publication number: **0 045 785**

Office européen des brevets **B1**

(12) **EUROPEAN PATENT SPECIFICATION**

(45) Date of publication of patent specification: 23.04.86 (51) Int. Cl.⁴: **F 16 K 31/383,** A 61 C 17/02, B 05 B 1/08

(21) Application number: 81900609.9

(22) Date of filing: 04.02.81

(86) International application number: PCT/US81/00155

(87) International publication number: WO 81/02335 20.08.81 Gazette 81/20

(54) **A FLUID DEVICE.**

(30) Priority: 13.02.80 US 121101

(43) Date of publication of application: 17.02.82 Bulletin 82/07

(45) Publication of the grant of the patent: 23.04.86 Bulletin 86/17

(84) Designated Contracting States: DE FR GB

(56) References cited:
FR-A-2 342 101
US-A-2 229 829
US-A-3 499 440
US-A-3 910 303
US-A-3 920 185
US-A-4 015 779
US-A-4 131 233

(73) Proprietor: GIBBS, Alan H.
10700 Caribbean Boulevard
Miami, FL 33189 (US)

(72) Inventor: GIBBS, Alan H.
10700 Caribbean Boulevard
Miami, FL 33189 (US)

(74) Representative: Caro, William Egerton et al
J. MILLER & CO. Lincoln House
296-302 High Holborn
London WC1V 7JH (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a pulsating fluid discharge device, for example for use in oral hygiene device, which discharge device is driven by the power of a pressurised input fluid and self-generated forces, the discharge device comprising a housing with an inlet for connection to a supply pipe and a main outlet of the pulsating fluid, and a valve member in the housing between the inlet and the outlet, the valve member being reciprocable alternatively to restrict and to open communication between the inlet and outlet.

Such a discharge device is disclosed in US—A—4015779, the discharge device including a housing with a fluid inlet channel for connection to a supply of fluid under pressure, a fluid outlet channel and a spring-biased diaphragm valve therebetween, which valve alternately opens and closes. A pressure accumulator, adjacent the inlet channel, contains a sealed gas compartment separated from the inlet channel by an elastic separator element so that pressure fluctuations in the fluid inlet channel are generally absorbed or attenuated by compression and expansion of the gas in the accumulator.

The elastic separator element and diaphragm are subject to rapidly changing bending stresses during pulsation, so that damage and failure may result from the accompanying fatigue, leading to deleterious breakdown.

Such bending stresses are avoided in a discharge device according to the invention, all the moving parts being substantially rigid.

According to the invention, a pulsating fluid discharge device is characterised in that the valve member is carried by a piston reciprocable within a chamber within the housing with space between the periphery of the piston and the side of the chamber, in that the housing has passages to convey input fluid around the chamber and towards the valve member below the piston, in that the surface of valve member is shaped along its first axial part to re-direct the input fluid along the valve member and is shaped along its second axial part to re-direct the input fluid at least partly towards the outlet, in that chamber is connected to biasing means within the housing, and in that there is a secondary restricted outlet for fluid from above the piston in the chamber, whereby the pressurised input fluid, biasing means and restricted outlet cause reciprocation and self generated forces aid cyclic movement when the discharge device is connected to the fluid supply pipe system. Particular embodiments of the invention are set out in the dependent claims.

In another prior art pulsating fluid discharge device disclosed in US—A—3499440, the flow of fluid through the device is divided between two outlets so that a great deal of the fluid passing through is wasted by direct discharge and the discharged fluid is not usable for oral hygiene purposes as the device does not operate continuously.

One way of carrying out the invention is hereinafter particularly described with reference to the accompanying drawings, in which some drawings show specific dimensions in inches (1 inch = 25.4 mm):—

Figure 1 is a partially broken away sectional elevational view of a pulsating fluid discharge device according to the invention in a flow-through position;

Figure 2 is a similar view of the discharge device connected to a faucet and with an aerating device in position;

Figure 3 is a sectional view on the line 2—2 of Figure 2;

Figure 4 is a sectional view on the lines 3—3 of Figure 3 with some components removed or broken away;

Figure 5 is a scale bottom plan view of the upper housing of the present invention.

Figure 6 is an upright scale elevational cross-section of Figure 5 taken along lines 6—6.

Figure 7 is a reversed scale elevational view of the upper housing of Figure 6.

Figure 8A is a scale view of the section of Figure 5 taken along lines 8A—8A.

Figure 8B is a scale view of the section of Figure 8A taken along lines 8B—8B.

Figure 9 is a scale top plan view of the lower housing of the present invention.

Figure 10A is a scale cross-section of Figure 9 taken along lines 10A—10A.

Figure 10B is a scale cross-section of the section of Figure 10A taken along lines 10B—10B.

Figure 10C is a scale cross-section of the section of Figure 10A taken along lines 10C—10C.

Figure 10D is an enlarged cross-sectional view of the vent for discharge out a port through the lower housing of the present invention shown in Figures 9 and 10A.

Figure 11 is a scale right side elevation of Figure 9.

Figure 12 is a scale top plan view of a hose adapter for the present invention.

Figure 13 is a scale elevational cross-section of Figure 12 taken along lines 13—13.

Figure 14 is a scale elevational cross-section of Figure 12 taken along lines 14—14.

Figure 15 is a scale elevational view of a hose adapter for the present invention shown in Figure 12.

Figure 16A is a scale bottom plan view of the hose adaptor of Figure 12.

Figure 16B is a section of Figure 12 taken along lines 16B—16B.

Figure 17 is a scale elevational view of the probe used with the present invention.

Figure 18 is a scale cross-sectional side view of the probe in Figure 18 showing a control valve screw movable into and out of the fluid flow path.

Figure 19A is a scale cross-sectional view of the probe in Figure 17 taken along lines 19A—19A.

Figure 19B is a scale cross-sectional view of the probe in Figure 17 taken along lines 19B—19B.

Figure 20 is a scale enlarged view of the threaded base of the probe in Figure 17.

Figure 21 is a scale elevation view of the piston cylinder housing or upper piston cage of the present invention.

Figure 22 is a scale bottom view of the piston cylinder housing of Figure 21.

Figure 23 is a scale top plan view of the piston cylinder housing of Figure 21.

Figure 24 is a scale cross sectional view of the piston cylinder housing taken along lines 24—24 of Figure 22.

Figure 25 is a scale cross sectional view of the piston cylinder housing of Figure 23 taken along the lines 25—25.

Figure 26 is a scale top plan view of the lower piston cage of the present invention.

Figure 27 is a scale elevational view of the lower piston cage in Figure 26.

Figure 28 is a scale cross-section view of Figure 26 taken along lines 28—28.

Figure 29 is a scale top plan view of the hose collet used with the present invention.

Figure 30 is a scale cross-section of the hose collet of Figure 29 taken along lines 30—30.

Figure 31 is a scale elevational view of the pin or valve or metering member which is inserted in the vent shown in Figures 9 and 10A.

Figure 32 is a scale bottom plan view of the pin of Figure 31.

Figure 33 is a scale top plan view of the piston of the movable member of the present invention.

Figure 34 is a scale cross-sectional view of the piston in Figure 33 taken along lines 34—34.

Figure 35 is a scale top plan view of the driven member less the piston of the actuating apparatus of the present invention.

Figure 36 is a scale side view partially in cross-section of the driven member less the piston shown in Figure 35 taken along lines 36—36.

Figure 37 is a scale side elevational view of the probe, probe handle and a portion of the hose in cross-section.

Figure 38 is a scale top view of the hose adapter positioning portion or member.

Figure 39 is a cross-sectional side view taken along lines 39—39 and looks in the direction of the arrows in Figure 38.

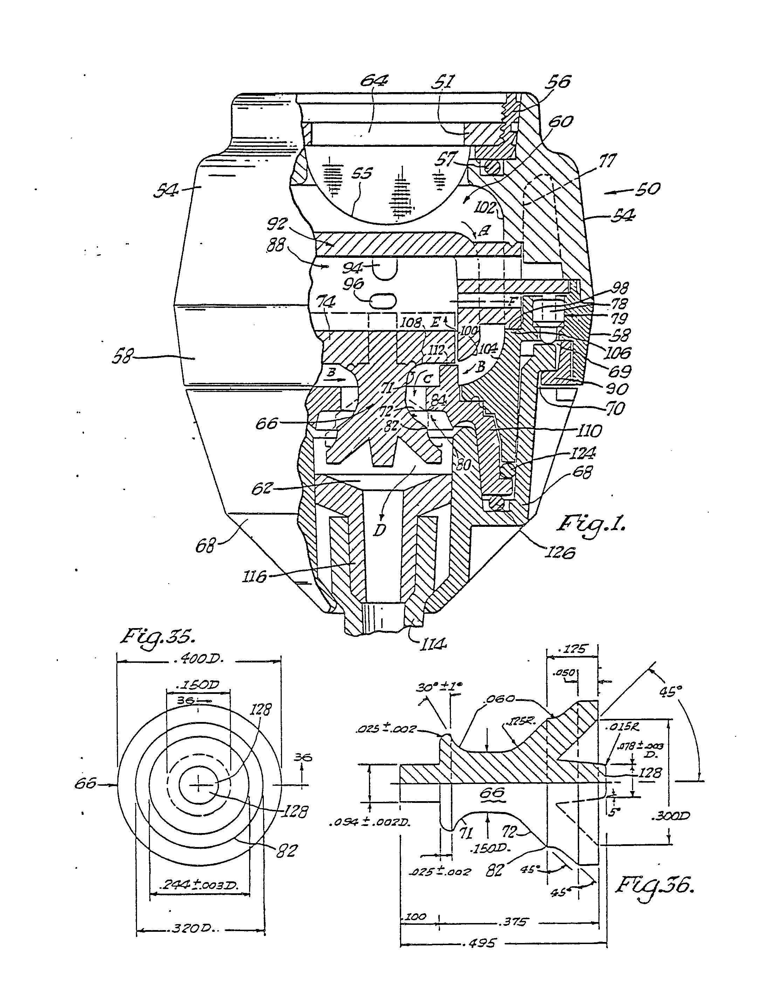

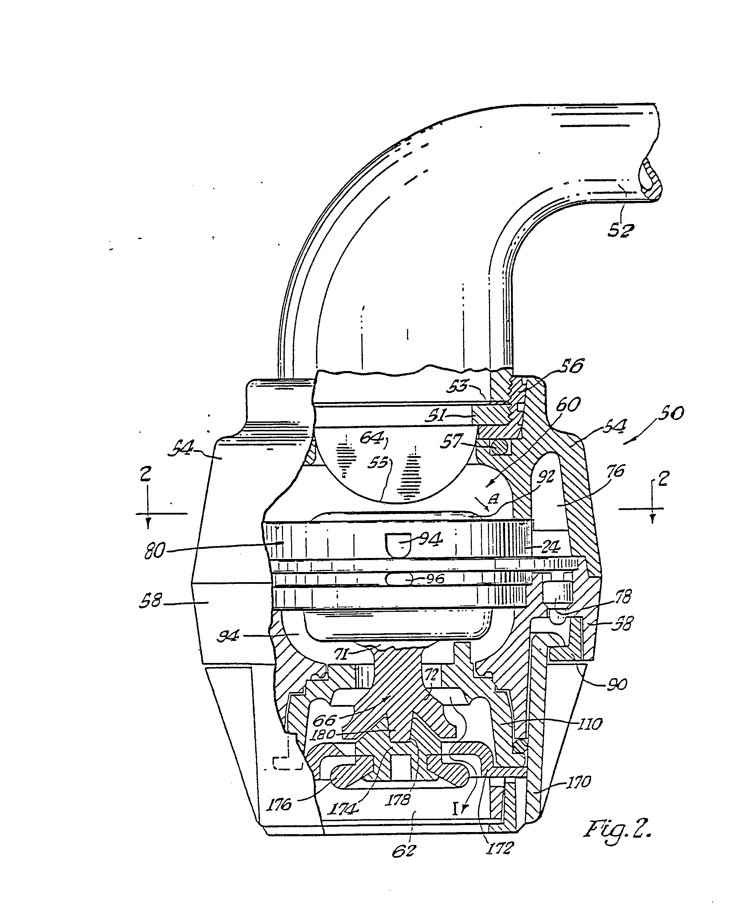

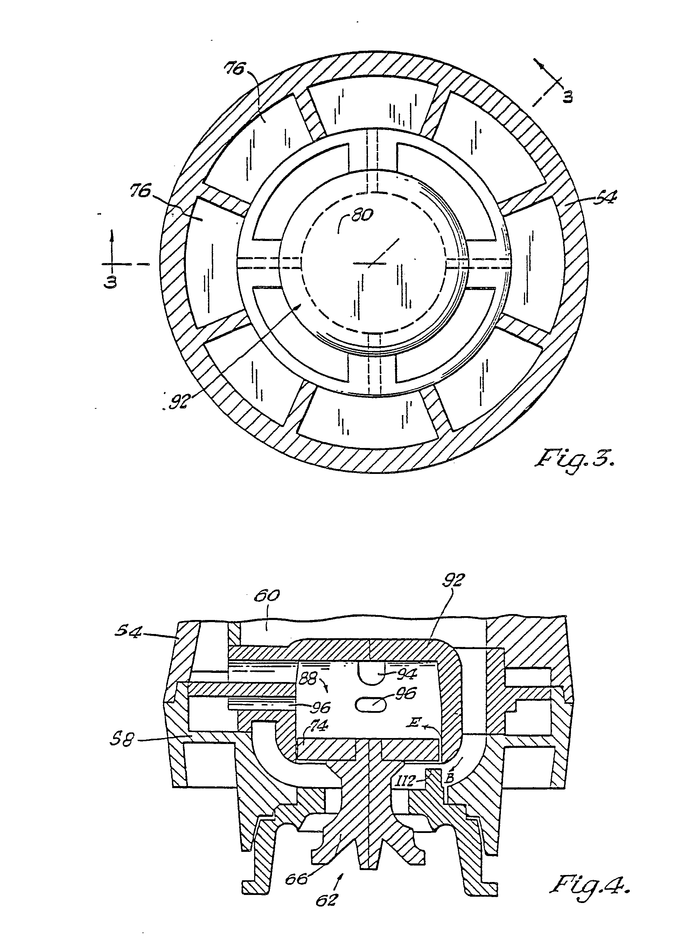

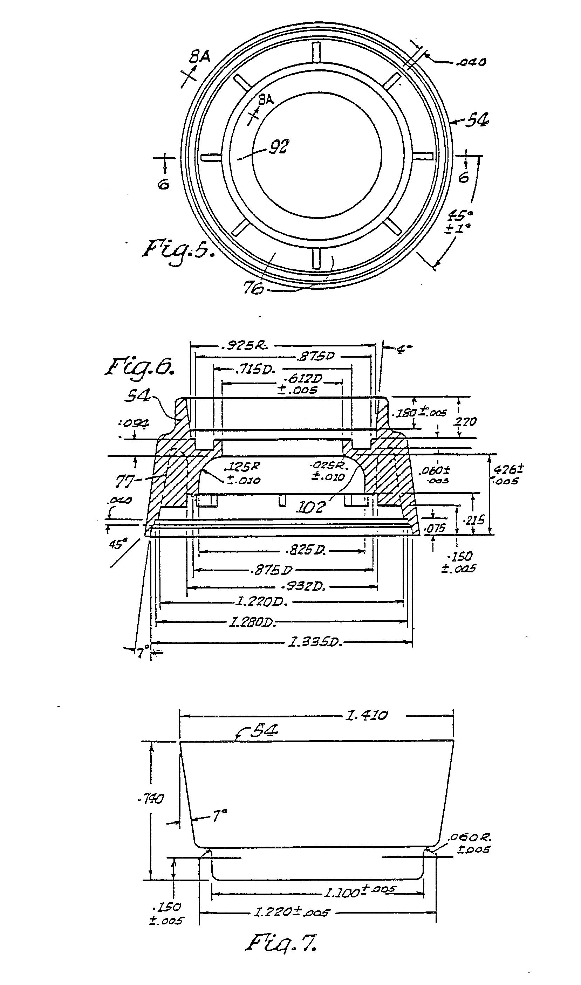

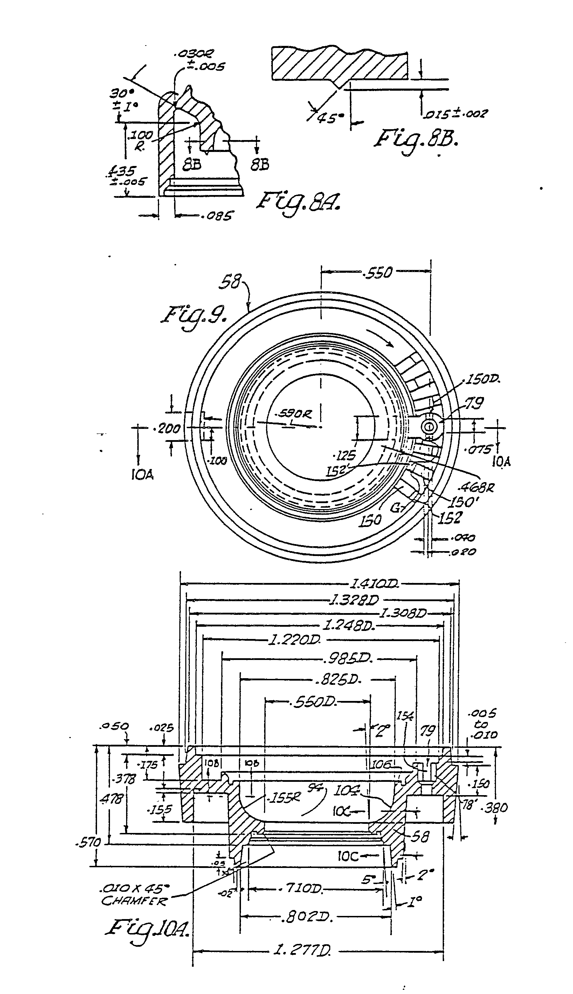

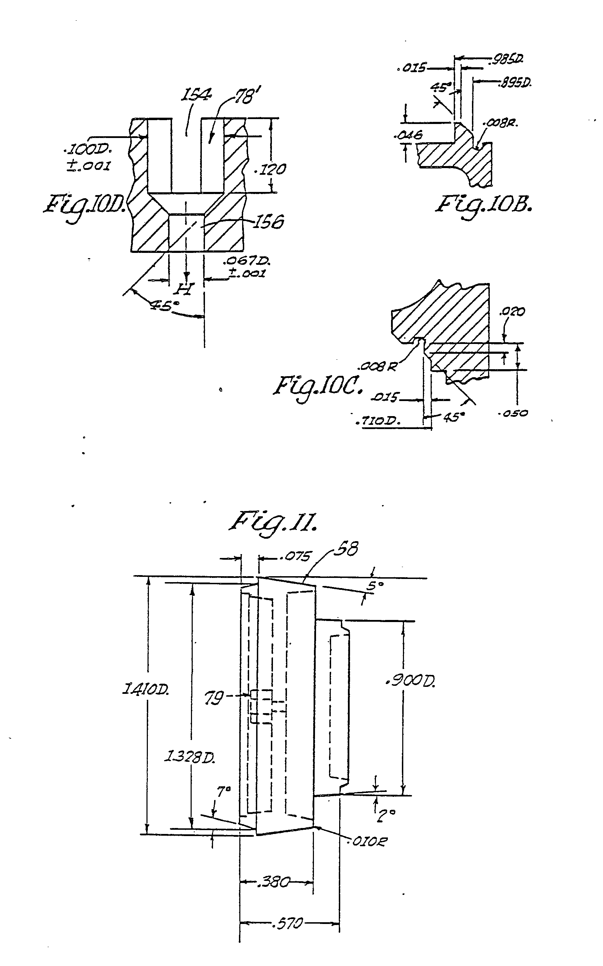

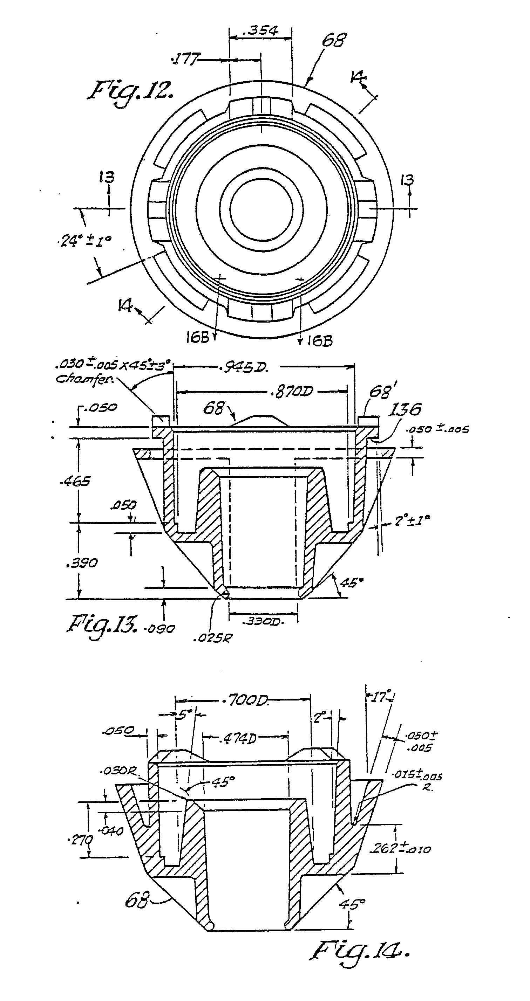

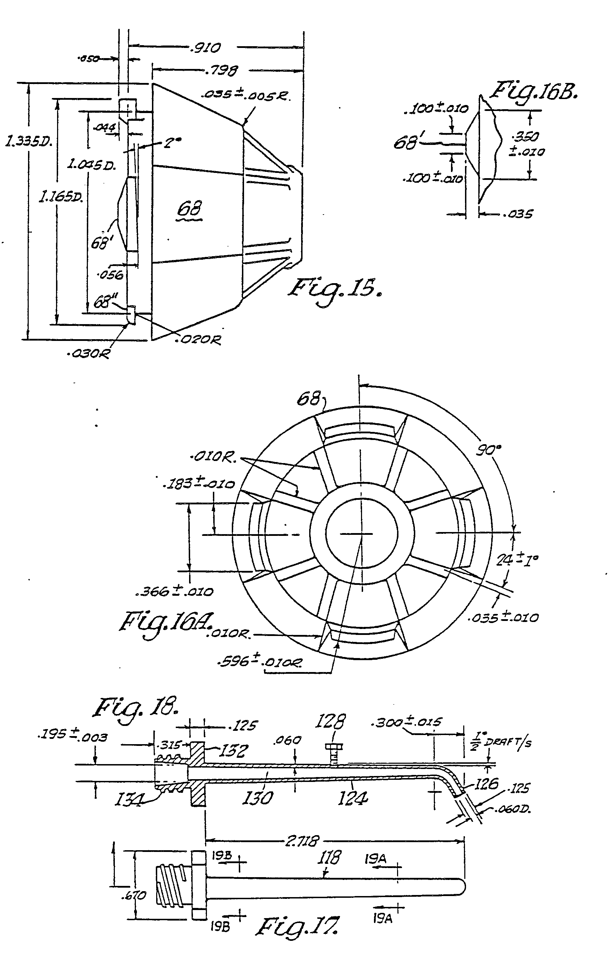

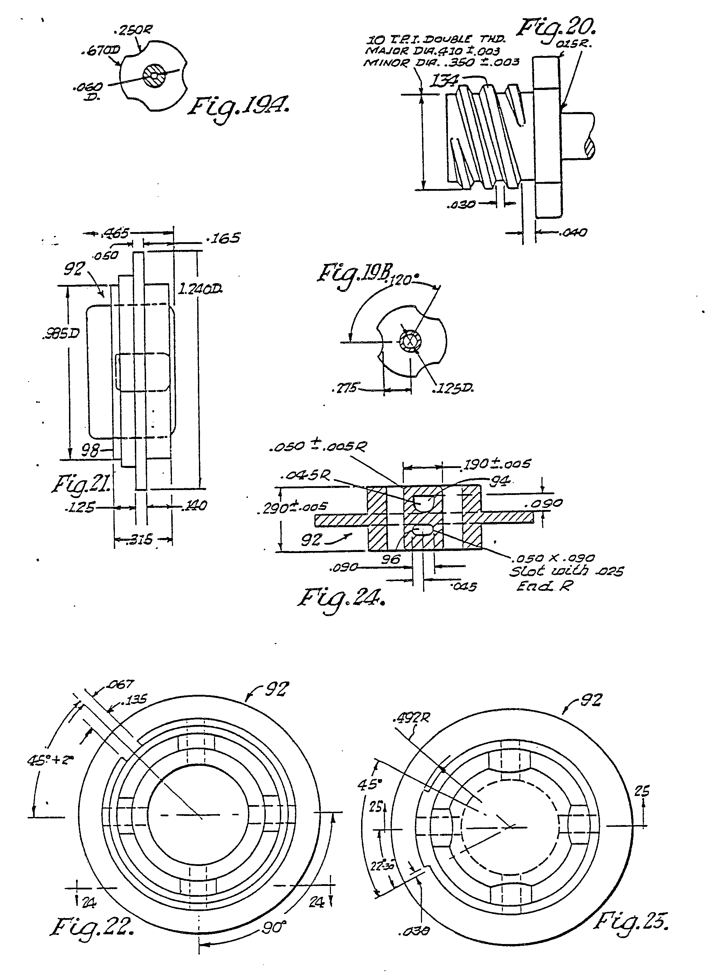

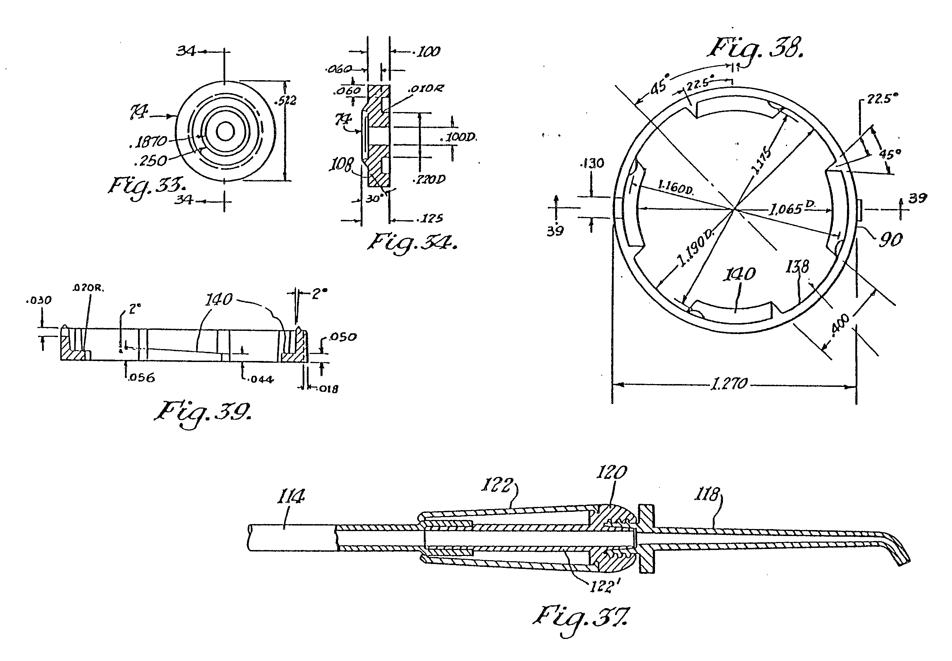

Referring now in detail to the drawings, wherein an embodiment of the invention is shown, Figures 1, 3, and 4 illustrate the device in a pulsating mode, and Figure 2 illustrates the device in an aeration mode. Figures 5 through 39 are scale drawings of one working embodiment of the invention to fully disclose the device whose precise theoretrical operating characteristics may be undefined at this time.

Referring now in particular to Figure 1, the oral hygiene device or fluid flow device generally designated as numeral 50 is attachable to a household faucet such as 52 in Figure 2 having an output valve not shown. The fluid flow device 50 in Figures 1 and 2 includes an upper body member 54, shown in detail in Figures 5 through 7, connected to an adapter 56 with a gasket 57. Adapter 56 allows the device to be secured to the faucet 52. Other shaped adapters may be used. A washer 51 may be used to prevent leaks. An additional flat washer 53 may also be used with the washer 51 to further secure the device to the faucet 52 as shown in Figure 2. A filtering screen may be used to screen out foreign particles. A filtering screen is illustrated by number 55 in Figure 1.

The fluid flow device includes the upper body member 54 and a lower body member 58 that is connected to the upper body member 54 by a well known connecting means. The lower body member is shown in detail in Figures 9 through 11. The various elements of the fluid flow device may be welded together and are releasably connected by mating portions. The upper and lower body members 54 and 58 define an elongated cavity 60 for holding or containing the drive system or means, the driven member 66 and the control system or means. The driven member is shown in detail in Figures 33 through 36.

The fluid flow device 50 is therefore connectable to the discharge of a variable flow fluid supply system. The fluid supply system supplies fluid to power the device 50 in order to reciprocate the driven member 66 and to provide pulsating fluid output from the device through the exit or output adjacent numeral 62. The device 50 includes an actuating apparatus or actuating means or motor located in cavity 60. The actuating apparatus or means is powered by the fluid input or water from the fluid supply system to control the fluid to produce a reciprocating driven member 66 and to pulsate the fluid output of the greater portion of the fluid input. The body houses the actuating apparatus or means. The body includes an inlet adjacent numeral 64, an outlet at 62, central portion, and a main fluid path or conduit shown by arrows A, B, and C in Figure 1. Arrow D shows the path of the greater portion of fluid flowing out toward the exit 62. The central portion is fluidly connected to the inlet 64 by the upper portion of the main fluid conduit. The outlet 62 is fluidly connected to the central portion by the lower portion of the main fluid conduit in order to discharge the greater portion of the fluid input. The actuating apparatus or motor is fluidly connected to the central portion of the device.

The actuating apparatus or means includes a drive means, a driven member 66 and a control means as shown in Figure 1. The driven member 66 includes, among other things, the fluid or fluidic surfaces 71 and 72. Surface 71 is used to drive the driven body of the driven member upward. The surface or portion 72 is used to drive the driven body of the driven member downward. The drive means includes, among other things, fluid flow means adjacent arrow B and biasing means. The fluid flow means is an orifice directing fluid against the driven member 66. The biasing means shown herein as an air chamber 76 is shown in Figures 2 and 5 and in Figures 1 and 6 by dashed lines 77. The biasing means includes the air chamber or chambers 76 and cavity 88. The biasing means operates on piston 74 of driven member 66. The control means illustrated by numeral 79 includes valve 78 shown in detail in Figures 31 and 32. The valve 78 is moved up by an upper portion 68'. The pulsating hose adapter 68 shown in Figures 12 through 16B to open up an initiating or trigger fluid path is shown by arrow F in Figure 1. The fluid flows in and around piston 74 as shown by arrow E. The outer circumference is spaced from the sides of the chamber 88. The small quantity of fluid exit out through the path designated by numbers 69 and 70. The exiting of the triggering fluid allows the pulsating means to begin a new cycle in the repetitive cyclic movement of the driven member 66.

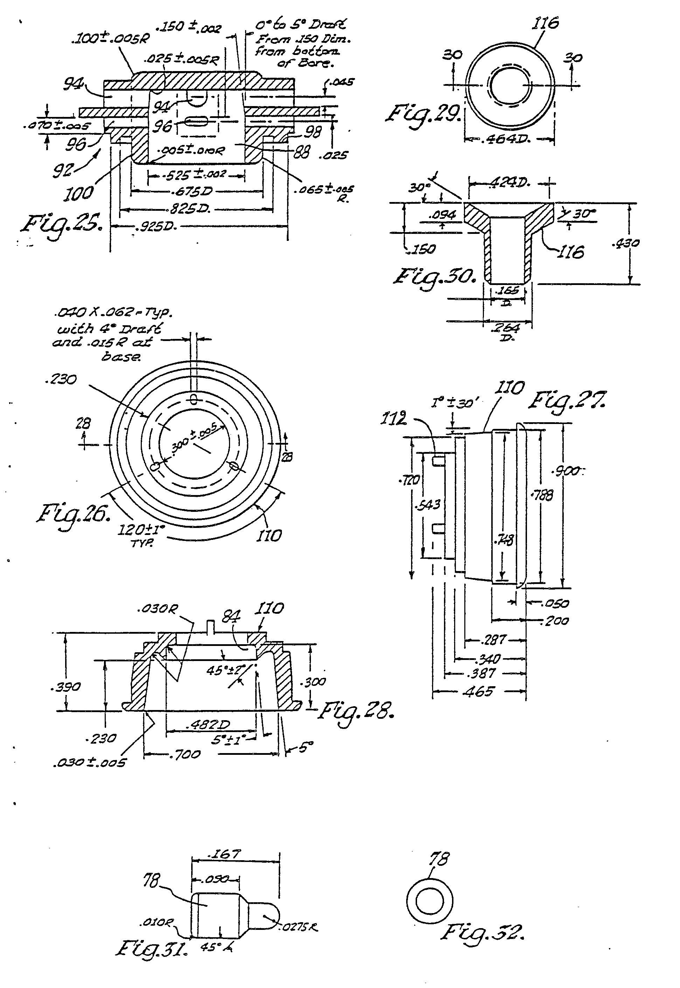

The driven member 66 creates the pulsating output at exit 62. The driven member 66 includes a driven gating portion at 82 that is operatively connected adjacent the exit or outlet 62 to pulsate the fluid output before it moves out along a path shown by arrow D. The up and down movement of drive member 66 opens and closes the gate means 80 that includes the driven gate portion 82 and a base portion 84 on the lower piston cage member 110. The lower piston cage member 110 is shown in detail in Figures 26 through 28.

The driven member 66, the drive means and the control means are all operatively connected to power the cyclic movement of the driven member 66 and to pulsate the output fluid. Fluidic flow paths are provided to move the driven member 66 up and down in the body. The fluid flows from the orifice and flows out as indicated by arrow B from the circumscribed orifices. The fluid engages surface 71 of the driven member 66 to force it upward. The fluid from the orifice flows onto surface 72 when the driven member 66 is in an up position to move the driven member down. A greater portion of the fluid input passes by the driven member 66 and out through gate means 80 to the outlet 62. The biasing means aids in continuing the cyclic movement. The control means varies the forces on at least a portion of the driven member, that is, the piston 74, to continue the cyclic movement by providing the unbalancing force on the driven member to initiate or trigger each cycle. The control fluid or triggering fluid discharges out through control means 79. The control means 79 includes valve 78 shown in Figures 31 and 32 and the valve cage 78' shown in Figure 10D. A small quantity of triggering fluid from the control means then passes out of the device by moving from a point indicated by numeral 69 to a point indicated by numeral 70. The fluid will pass between the hose adapter 68 and the hose adapter positioning portion 90 or lug ring member 90 that is positioned between the lower body member 58 and the hose adapter. The lug ring member 90 shown in Figure 38 may be welded to the lower body member 58.

Gaskets 124 may be placed between the lower piston cage 110 and the bottom concentric portion of the lower body portion 58 to prevent leaks. Gasket 126 may be placed between a portion of the hose adapter 68 and the lower piston cage 110 to prevent leaks. The various parts of the device may be constructed of ABS plastic or other suitable material.

In the pulsating mode, see Figures 1, 3 and 4, the piston cylinder housing 92 shown in detail in Figures 21 through 25 is disposed within the defined elongated cavity 60 as illustrated in Figures 1, 2, and 4. The piston cylinder housing 92 includes a piston chamber 88, air chamber connection or conduit 94 and trigger fluid connection or passage 96. The cylinder housing 92 has a support portion 98. Further, the piston cylinder housing 92 has an outer fluidic surface 100 that provides a fluid path between the outer fluid surface 100 and the inside wall 102 of the upper body member 54 and the inside wall surface 104 of the lower body member 58. The support portion 98 is supported upon a concentric lip 106 of the lower body member 58.

The piston cylinder housing 92 allows the piston 74 to move therein and provide a biasing means to aid in cyclic movement of the driven member 66. The driven member 66 is fixedly connected to the piston 74. The piston 74 is bottomed out when the lower surface 108 contacts the upper surface portion 112 of the lower piston cage 110 shown in Figures 26 through 28.

The hose adapter 68 not only lifts valve member 78 to an open position as shown in Figure 1, but also connects the hose 114, preferably a urethane tubing having a length of about twenty-four inches, to the device. The tube 114 may include a proximal adapter member 116 also shown in Figures 29 and 30 that lies between the hose adapter 68 and the proximal end of the hose 114. The distal or other end of the hose 114 shown in Figure 37 includes a probe 118. The probe may be connected to the distal end of the hose 114 by a probe mount body 120 with a probe mount cover 122.

The probe shown in Figures 17 through 20 includes an elongated tapered nozzle 124 with a turned end portion 126. A screw means 128 is moveable into and out of the probe channel 130 to regulate the rate of the pulsating fluid jetting out of the end 126. The screw 128 may be used to control the rate of pulse when the supply fluid from a faucet is at a generally steady pressure and quantity of flow. Screw 128 may be located in member 122 and 122' in order to control the rate of pulse. Screw 128 may also reduce the quantity of flow. The distal end of the probe includes a flange 132 and a screw meeting means 134. The screw means meets with the probe by the mount body 120 shown in Figure 37. The sizing and scale of the device may be as shown in Figures 17 through 20.

When the hose is mounted by the hose adapter 68, the hose adapter shown in Figures 12 through 16B includes an upper lifting portion 68'. The lifting portion 68' is an actuating device that lifts the valve 78 in order to initiate the control means to release fluid to control the cyclic movement of the device. The actuating member 68' is moved into position with the hose adapter 68. The hose adapter (see Figure 13) and the shelf portion 136 moves through openings 138 shown in Figure 38 in order that the support shelf 136 fits on top of the ring support member 140. It should be noted that support shelf 140 holds the hose adapter in position as shown in Figures 38, 39, and 13. The tolerances may even be made tighter than shown in the drawings to frictionally secure the hose adapter to the ring member 90.

It should be noted that the fluid driven fluid flow control device has a pulsating mode when lowered end of member 78 in Figure 31 is in contact with the top of member 68' in Figure 15 and a non-pulsating mode when the lower end of member 78 in Figure 31 is in contact with the top of member 68'' in Figure 15.

Referring now to the lower housing member 58 shown in Figures 9, 10A, 10B, 10C, 10D, as well as Figure 11, the initiating fluid or triggering fluid that moves out of the upper piston cage 88 through openings 96, as shown by arrow F in the vent in Figure 1, will move through a tortuous path around wall portions 150 through cut down channels 152, as shown in Figure 9. The fluid will move through the tortuous path as shown by arrow G in Figure 9 and moves through slot 154 in Figure 10A into the drip valve cage 78'. When the drip valve member 78 is lifted up, the fluid will move out through channel 156 shown by arrow H in Figure 10D.

To convert the device to an aeration device, the hose adapter 68, gasket 126, hose 114, proximal adapter 116, and the probe 118 are removed from the device. As shown in Figure 2, the aeration holder 170 is connected to lug ring 90. The holder 170 is connected to member 172 which in turn is connected to damper 174 with aeration fixture 176. The damper 174 includes a water cavity 178 in which projection 180 of member 66 will move to fix the position of 66 as shown in Figure 2. The water will flow along path shown by arrow I to provide aerated water output by well known means.

The scale drawings are filed in this case because of the fluidic operation of the device whose mathematical formula and complete theory of operations is not known at this date.

## Claims

1. A pulsating fluid discharge device connectable to a fluid supply pipe system, which discharge device is driven by the power of a pressurised input fluid and self-generated forces, the discharge device (50) comprising a housing (54, 58) with an inlet (64) for connection to a supply pipe (52) and a main outlet (62) for the pulsating fluid, and a valve member (66) in the housing between the inlet (64) and the outlet (62), the valve member being reciprocable alternately to restrict and to open communication between the inlet and outlet, characterised in that the valve member (66) is carried by a piston (74) reciprocable within a chamber (88) within the housing (54, 58) with space between the periphery of the piston and the side of the chamber, in that the housing has passages (100, 102, 104) to convey input fluid around the chamber and towards the valve member (66) below the piston (74), in that the surface of valve member (66) is shaped along its first axial part (71) to re-direct the input fluid along the valve member and is shaped along its second axial part (72) to re-direct input fluid at least partly towards the outlet (62), in that the chamber (88) is connected to biasing means (76, 77) within the housing (54, 58), and in that there is a secondary restricted outlet (96, 152, 154, 79, 69, 70) for fluid from above the piston (74) in the chamber (88), whereby the pressurised input fluid, biasing means and restricted outlet cause reciprocation and self-generated forces aid cyclic movement when the discharge device is connected to the fluid supply pipe system.

2. A device according to claim 1, characterised in that the secondary outlet (96) includes a path through gaps (152) in transverse walls (150) in an annular path leading to a valve cage (78'), where the valve is adjustable.

3. A device according to claim 2, characterised in that the valve cage (78') contains a valve closure member (78) whose position in relation to the valve seat is determined by engagement with a nose (68' or 68''), or the inclined surface between which serves to raise or lower the valve closure member (78), on a ring member (68) attachable to the housing (54, 58).

4. A device according to any preceding claim, characterised in that the biasing means are air chambers (76, 77) within the housing.

5. A device according to any preceding claim, characterised in that the first axial part (71) of the surface of the reciprocable valve member (66) has a curved shape such that fluid impinging thereon produces a reaction upon the valve member to urge it in a direction to move the piston (74) into the chamber (88), and the second axial part (72) of the surface of the reciprocable valve member (66) has a curved shape such that fluid impinging thereon produces a reaction upon the valve member to urge it in a direction to move the piston (74) out of the chamber (88).

6. A device according to claim 5, characterised in that movement of the valve member (66) in a direction to move the piston (74) into the chamber (88) is limited by abutment of a surface of a portion (82) of the valve member (66) upon a seat portion (84) to close the valve member.

7. A device according to claim 5 or 6, characterised in that movement of the valve member (66) in a direction to move the piston (74) out of the chamber (88) is limited by engagement of the piston (74) with stop means (112).

8. A device according to any preceding claim, characterised in that the conveyance of the input fluid is radially inwardly towards the valve member (66) and the re-direction of the input fluid towards the outlet (62) is radially outwardly.

9. A device according to any preceding claim, characterised by a controllable restricted outlet (96) in order to initiate the cyclic operation.

10. A device according to any preceding claim, characterised by an adjustable closure means (128) in an outlet channel for fluid from the main outlet (62) in order to control the rate of flow of fluid through the device and to control the rate of reciprocation of the reciprocable valve member (66).

11. A device according to any preceding claim, characterised in that an aeration device is mounted on the main outlet (62) and comprises a path through which fluid leaving the outlet is forced to flow.

12. The use of a device according to any preceding claim, as part of an oral hygiene fluid flow device.

13. The combination of a device according to any of claims 1 to 11, with a discharge outlet from a supply system for fluid under pressure.

**Revendications**

1. Dispositif distributeur de fluide pulsatoire pouvant être raccordé à un système de conduites d'alimentation en fluide, lequel dispositif distributeur est mû par l'énergie d'un fluide d'entrée sous pression et de forces auto-engendrées, le dispositif distributeur (50) comprenant un boîtier (54, 58) muni d'une entrée (64) destinée à être raccordée à un tube d'alimentation (52) et d'une sortie principale (62) de fluide pulsatoire, et un clapet de soupape (66) contenu dans le boîtier entre l'entrée (64) et la sortie (62), le clapet pouvant être animé d'un mouvement alternatif pour étrangler et ouvrir la communication entre l'entrée et la sortie, caractérisé en ce que le clapet de soupape (66) est porté par un piston (74) mobile en mouvement alternatif dans une chambre (68) ménagée dans le boîtier (54, 58), en laissant de l'espace entre la périphérie du piston et la paroi latérale de la chambre, en ce que le boîtier présente des passages (100, 102, 104) permettant de faire passer le fluide d'entrée autour de la chambre et vers le clapet de soupape (66) situé sous le piston (74), en ce que la surface du clapet (66) est conformée, le long de sa première partie axiale (71), pour dévier le fluide d'entrée le long du clapet et est conformée le long de sa deuxième partie axiale (72), pour dévier le fluide d'entrée au moins en partie vers la sortie (62), en ce que la chambre (88) est reliée à des moyens de sollicitation (76, 77) situés dans le boîtier (54, 58) et en ce qu'il est prévu une sortie secondaire étranglée (96, 152, 154, 79, 69, 70) pour le fluide à partir d'au-dessus du piston (74) dans la chambre (88), de sorte que le fluide d'entrée sous pression, les moyens de sollicitation et la sortie étranglée provoquent un mouvement alternatif et que des forces auto-engendrées assistent le mouvement cyclique lorsque le dispositif distributeur est raccordé au réseau de conduites d'alimentation en fluide.

2. Dispositif selon la revendication 1, caractérisé en ce que la sortie secondaire (96) comprend un trajet passant par des fentes (152) ménagées dans des parois transversales (150), dans un trajet annulaire qui mène à une cage de soupape (78') dans laquelle la soupape peut être ajustée.

3. Dispositif selon la revendication 2, caractérisé en ce que la cage de soupape (78') contient un élément de fermeture de soupape (78) dont la position par rapport au siège de la soupape est déterminée par coopération avec un bossage (68' ou 68") ou sur un élément annulaire (68) qui peut être fixé au boîtier (54, 58), la surface inclinée comprise entre ce bossage et qui sert à faire monter ou descendre l'élément de fermeture de soupape (78).

4. Dispositif selon une revendication précédente quelconque, caractérisé en ce que les moyens de sollicitation sont des chambres à air (76, 77) situées dans le boîtier.

5. Dispositif selon une revendication précédente quelconque, caractérisé en ce que la première partie axiale (71) de la surface du clapet de soupape (66) à mouvement alternatif, présente une forme courbe telle que le fluide qui la frappe produise une réaction sur le clapet de soupape pour tendre à le déplacer dans un sens qui fait pénétrer le piston (74) dans la chambre (88), et la deuxième partie axiale (72) de l'élément de soupape (66) à mouvement alternatif présente une surface courbe telle que le fluide qui la frappe produise une réaction sur le clapet de soupape, pour tendre à le déplacer dans un sens qui fait sortir le piston (74) de la chambre (88).

6. Dispositif selon la revendication 5, caractérisé en ce que le mouvement du clapet de soupape (66) dans un sens qui fait pénétrer le piston (74) dans la chambre (88) est limité par l'arrivée en butée d'une surface d'une partie (82) du clapet de soupape (66) sur une partie siège (84) pour fermer le clapet de soupape.

7. Dispositif selon la revendication 5 ou 6, caractérisé en ce que le mouvement du clapet de soupape (66) dans le sens tendant à faire sortir le piston (74) de la chambre (88), est limité par le contact du piston (74) avec des moyens de butée (112).

8. Dispositif selon une revendication précédente quelconque, caractérisé en ce que le transport du fluide d'entrée se produit radialement vers l'intérieur, vers le clapet de soupape (66) et que la déviation du fluide d'entrée vers la sortie (62) se produit radialement vers l'extérieur.

9. Dispositif selon une revendication précédente quelconque, caractérisé par une sortie étranglée réglable (96) destinée à permettre de déclencher le fonctionnement cyclique.

10. Dispositif selon une revendication précédente quelconque, caractérisé en ce qu'un moyen de fermeture réglable (128) est prévu dans un conduit de sortie pour le fluide qui s'écoule par la sortie principale (62) pour régler le débit de passage du fluide à travers le dispositif et pour régler la cadence du mouvement alternatif du clapet de soupape à mouvement alternatif (66).

11. Dispositif selon une revendication précédente quelconque, caractérisé en ce qu'un dispositif d'aération est monté sur la sortie principale (62) et constitue un trajet pour lequel le fluide qui quitte la sortie est contraint à passer.

12. Emploi d'un dispositif selon une revendication précédente quelconque en qualité d'un dispositif d'écoulement de fluide pour hygiène buccale.

13. Combinaison d'un dispositif selon l'une quelconque des revendications 1 à 11 avec une sortie de distribution d'un système d'alimentation en fluide sous pression.

**Patentansprüche**

1. An ein Fluidleitungsnetz anschließbare Vorrichtung für pulsierende Fluidabgabe mit Antrieb durch das Leistungsvermögen eines druckbeaufschlagten Eintrittsfluids und von eigenerzeugten Kräften, wobei die Abgabevorrichtung (50) ein Gehäuse (54, 58) mit einem Einlaß (64) zum Anschluß an eine Zuleitung (52) und einen Hauptauslaß (62) für das pulsierende Fluid sowie ein Ventilglied (66) in dem Gehäuse zwischen dem Einlaß (64) und dem Auslaß (62) aufweist und wobei ferner das Ventilglied hin und her bewegbar ist, um die Verbindung zwischen dem Einlaß und dem Auslaß abwechselnd zu begrenzen und zu öffnen, dadurch gekennzeichnet, daß das Ventilglied (66) von einem Kolben (74) getragen wird, der innerhalb einer Kammer (88) in dem Gehäuse (54, 58) hin und her bewegbar ist, wobei zwischen dem Umfang des Kolbens und der Seitenwand der Kammer ein Zwischenraum verbleibt, daß das Gehäuse mit Durchlässen (100, 102, 104) versehen ist, um Eintrittsfluid rings um die Kammer und in Richtung auf das Ventilglied (66) unter den Kolben (74) zu führen, daß die Oberfläche des Ventilglieds (66) längs seines ersten Axialabschnitts (71) so geformt ist, daß das Eintrittsfluid längs des Ventilglieds umgelenkt wird, und längs seines zweiten Axialabschnitts (72) so geformt ist, daß Eintrittsfluid zumindest teilweise in Richtung auf den Auslaß (62) umgelenkt wird, daß die Kammer (88) in Verbindung mit einem Kraftspeicher (76, 77) innerhalb des Gehäuses (54, 58) steht, und daß ein begrenzter Nebenauslaß (96, 152, 154, 79, 69, 70) für Fluid von oberhalb des Kolbens (74) in der Kammer (88) vorgesehen ist, wodurch das druckbeaufschlagte Eintrittsfluid, der Kraftspeicher und der begrenzte Auslaß eine Pendelbewegung verursachen und eigenerzeugte Kräfte eine periodische Bewegung unterstützen, wenn die Abgabevorrichtung an das Fluidleitungsnetz angeschlossen ist.

2. Vorrichtung nach Anspruch 1, dadurch gekennzeichnet, daß dem Nebenauslaß (96) eine Bahn durch Spalten (152) in Querwänden (150) in einer Ringbahn zugeordnet ist, die zu einem Ventilkorb (78') führt, wo das Ventil einstellbar ist.

3. Vorrichtung nach Anspruch 2, dadurch gekennzeichnet, daß der Ventilkorb (78') ein Ventilverschlußglied (78) enthält, dessen Stellung in Bezug auf den Ventilsitz durch Anlage an einer Nase (68' oder 68'') oder der dazwischen liegenden Schrägfläche auf einem an dem Gehäuse (54, 58) anbringbaren Ringteil (68) bestimmt wird, um das Ventilglied (78) zu heben oder zu senken.

4. Vorrichtung nach einem der vorhergehenden Ansprüche, dadurch gekennzeichnet, daß der Kraftspeicher als Luftkammern (76, 77) innerhalb des Gehäuses ausgebildet ist.

5. Vorrichtung nach einem der vorhergehenden Ansprüche, dadurch gekennzeichnet, daß der erste Axialabschnitt (71) der Oberfläche des hin und her bewegbaren Ventilglieds (66) eine derart gebogene Form hat, daß darauf treffendes Fluid eine Reaktionswirkung auf das Ventilglied im Sinne einer Bewegung des Kolbens (74) in die Kammer (88) hinein ausübt, und daß der zweite Axialabschnitt (72) der Oberfläche des hin und her bewegbaren Ventilglieds (66) eine derart gebogene Form hat, daß darauftreffendes Fluid eine Reaktionswirkung auf das Ventilglied im Sinne einer Bewegung des Kolbens (74) aus der Kammer (88) heraus ausübt.

6. Vorrichtung nach Anspruch 5, dadurch gekennzeichnet, daß die Bewegung des Ventilglieds (66) in einer Richtung, in der der Kolben (74) in die Kammer (88) hinein bewegt wird, durch die Anlage einer Fläche eines Teils (82) des Ventilglieds (66) an einem Sitzteil (84) begrenzt wird, um das Ventilglied zu schließen.

7. Vorrichtung nach Anspruch 5 oder 6, dadurch gekennzeichnet, daß die Bewegung des Ventilglieds (66) in einer Richtung, in der der Kolben (74) aus der Kammer (88) heraus bewegt wird, durch Anlage des Kolbens (74) an einer Anschlageinrichtung (112) begrenzt wird.

8. Vorrichtung nach einem der vorhergehenden Ansprüche, dadurch gekennzeichnet, daß die Zuführung des Eintrittsfluids radial einwärts in Richtung auf das Ventilglied (66) und die Umlenkung des Eintrittsfluids in Richtung auf den Auslaß (62) radial auswärts erfolgt.

9. Vorrichtung nach einem der vorhergehenden Ansprüche, gekennzeichnet durch einen steuerbaren begrenzten Auslaß (96), um die periodische Arbeitsweise einzuleiten.

10. Vorrichtung nach einem der vorhergehenden Ansprüche, gekennzeichnet durch ein einstellbares Verschlußteil (128) in einem Auslaßkanal für von dem Hauptauslaß (62) kommendes Fluid, um die Geschwindigkeit des Durchtritts des Fluids durch die Vorrichtung und die Geschwindigkeit der Hin- und Herbewegung des hin und her bewegbaren Ventilglieds (66) zu steuern.

11. Vorrichtung nach einem der vorhergehenden Ansprüche, dadurch gekennzeichnet, daß eine Belüftungsvorrichtung an dem Hauptauslaß (62) angeordnet ist und eine Bahn umfaßt, durch die hindurch den Auslaß verlassendes Fluid zwangsweise geleitet wird.

12. Anwendung einer Vorrichtung nach einem der vorhergehenden Ansprüche als Bestandteil einer Fluidstromvorrichtung für die Mundhygiene.

13. Kombination einer Vorrichtung nach einem der Ansprüche 1 bis 11 mit einem Auslaß zur Abgabe aus einem Versorgungsnetz für druckbeaufschlagtes Fluid.

Fig.1.

Fig.35.

Fig.36.

Fig.2.

Fig.3.

Fig.4.

Fig.5.

Fig.6.

Fig.7.

4

Fig.8B.

Fig.8A.

Fig.9.

Fig.10A.

*154*  *78'*

*.100D.*
*±.001*

*.120*

*Fig.10D.*

*156*

*.067D.*
*±.001*

*H*

*45°*

*.015*  *.985D.*

*.895D.*

*45°*

*.008R.*

*.046*

*Fig.10B.*

*.020*

*.008R*

*.015*

*.710D.*  *45°*  *.050*

*Fig.10C.*

*Fig.11.*

*.075*  *58*

*5°*

*1.410D.*

*79*

*.900D.*

*1.328D.*

*7°*

*2°*

*.010R*

*.380*

*.570*

6

0 045 785

Fig. 12.

Fig. 13.

Fig. 14.

7

Fig.15.

Fig.16B.

Fig.16A.

Fig. 18.

Fig.17.

8

0 045 785

Fig.19A.

.250R
.670D
.060 D.

Fig.20.

10 T.P.I. DOUBLE THD.
MAJOR DIA.410 ±.003
MINOR DIA. .350 ±.003
134
.030
.040
.015R.

Fig.19B.
120°
.775
.125D.

.465
.050
.165
92
1.240D.
.985D
98
Fig.21.
.125
.140
.315

.050 ±.005R
.045R
.190±.005
94.
.290±.005
.090
92
96
.090
.045
.050 X .090
Slot with .025
End R
Fig.24.

.067
.135
92
45°+2°
24
24
90°
Fig.22.

.492R
92
45°
25
25
25
22°30'
.038
Fig.23.

9

Fig.25.

Fig.26.

Fig.28.

Fig.29.

Fig.30.

Fig.27.

Fig.31.

Fig.32.

Fig.33.

Fig.34.

Fig.38.

Fig.39.

Fig.37.

0 045 785